# EUROPÄISCHE PATENTSCHRIFT

(11) **EP 0 866 934 B1**
(45) Veröffentlichungstag und Bekanntmachung des Hinweises auf die Patenterteilung: **29.12.1999**
(21) Anmeldenummer: 96931794.0
(22) Anmeldetag: 12.09.1996
(51) Int. Cl.: F16K 1/44

(54) **ABSPERRVENTIL**
STOP VALVE
SOUPAPE D'ARRET

(30) Priorität: 27.12.1995 DE 19548860
(43) Veröffentlichungstag der Anmeldung: 30.09.1998
(73) Patentinhaber: Alfa Laval LKM A/S, 6000 Kolding (DK)
(72) Erfinder: SONDERGAARD, Bjarne, DK-6000 Kolding (DK); SCHNEIDERREIT, Per, DK-6580 Vamdrup (DK); LINDHOLM, Jensen, Karl-Age, DK-5220 Odense S. (DK)
(74) Vertreter: Vonnemann, Gerhard, Dr.-Ing.
(86) Internationale Anmeldenummer: EP9603998
(87) Internationale Veröffentlichungsnummer: WO9724541

(56) Entgegenhaltungen:
- EP-A- 0 174 384
- EP-A- 0 545 846
- DE-A- 2 750 833
- DE-A- 3 005 329
- DE-A- 3 133 273
- DE-A- 4 236 464

## Beschreibung

Doppelsitzventil mit Leckagesicherung, insbesondere für die Lebensmittel- und Getränkeindustrie, das in seinem Gehäuse zwei zusammenwirkende Ventilteller aufweist, die einen Leckagehohlraum begrenzen, der über Leitungen gewöhnlich ins Freie mündet, wobei für das Betätigen beider Ventilteller ein gemeinsamer Antrieb vorgesehen ist, der einen Zylinder mit einem beidseitig von Druckfedern belasteten ersten Arbeitskolben enthält, welcher fest mit dem Ventilschaft des unteren Ventiltellers verbunden ist, wobei dieser Ventilschaft teleskopartig den oberen Ventilteller und dessen rohrförmigen Schaft durchsetzt, der seinerseits mit seinem oberen Ende in den Zylinder ragt und dort ein Widerlager trägt für die den oberen Ventilteller in seinen Sitz drückende, untere Druckfeder, während die obere, sich mit ihrem oberen Ende am oberen Zylinderdeckel abstützende Druckfeder den unteren Ventilteller gegen seinen Ventilsitz drückt, sowie im Zylinder unter dem ersten Arbeitskolben ein zweiter, auf den rohrförmigen Schaft wirkender, Arbeitskolben angeordnet ist, und zwischen erstem und zweitem Arbeitskolben ein auf dem rohrförmigen Schaft beweglicher dritter Arbeitskolben angeordnet ist, wobei der dritte Arbeitskolben in seiner Umfangsfläche dichtend vom ersten Arbeitskolben umfaßt ist, und erster und dritter Arbeitskolben gegeneinander verschiebbar ausgebildet sind.

Ein gattungsgleiches Absperrventil ist aus der DE 42 36 464 Al bekannt. Die Sitzflächen beider Ventilteller sind konisch ausgebildet und so ausgerichtet, daß beide Ventilteller in gleiche Richtung in die Sitzfläche einfahren. Zwischen den Ventiltellern wird ein Leckageraum gebildet, der über eine Leitung gewöhnlich ins Freie mündet. Eine Vermischung von Medien wird dadurch zuverlässig verhindert. Im geschlossenen Zustand wird der obere Ventilteller unter dem Druck des Mediums fester in seinen Ventilsitz gepreßt, während der untere Ventilteller entlastet wird. Um zu vermeiden, daß durch Druckstöße der untere Ventilteller angehoben wird und Medium in den Leckageraum übertritt, ist der untere Ventilteller nach unten in einen Ausgleichskolben fortgeführt, der ungefähr denselben Durchmesser aufweist wie der untere Ventilteller. Druckstöße in der Rohrleitung wirken somit mit gleicher Kraft auf den Ausgleichszylinder wie auch auf den Ventilteller, so daß sich die Druckkräfte in axialer Richtung ausgleichen.

Das Ventil kann drei Funktionen ausüben. Zum Öffnen des Ventils werden beide Ventilteller angehoben, zum Reinigen der Ventilsitze können der untere bzw. der obere Ventilteller jeweils einzeln geringfügig angehoben werden. Dazu ist das Ventil mit einem Zylinder ausgestattet, der vier Kolben aufweist. Die Arbeitskolben wirken über zwei konzentrisch angeordnete Ventilschäfte auf die beiden Ventilteller. Zum Öffnen wird ein erster Arbeitskolben durch Druckluft angehoben, bis er gegen einen zweiten Kolben stößt, der über einen Ventilschaft mit dem unteren Ventilteller verbunden ist. Erster und zweiter Kolben werden unter Mitnahme des unteren Ventiltellers weiter angehoben, bis der untere Ventilteller gegen den oberen Ventilteller stößt. Der Leckageraum ist jetzt geschlossen. Beim weiteren Anheben bewegen sich beide Ventilteller gemeinsam nach oben, wodurch das Ventil geöffnet wird. Das Schließen des Ventils läuft in umgekehrter Reihenfolge der Arbeitsschritte ab.

Zum Reinigen der Ventilsitze müssen die Ventilteller einzeln angehoben werden. Dazu sind ein dritter und ein vierter Kolben vorgesehen, die über die Ventilschäfte jeweils auf den unteren bzw. oberen Ventilteller wirken. Der dritte Kolben befindet sich zwischen zweitem Kolben und unterer Gehäusewand des Zylinders. Wird er an seiner Unterseite mit Druckluft beaufschlagt, wird er geringfügig angehoben, bis er an einem Widerlager anschlägt. Über den zugeordneten Ventilschaft wird der obere Ventilteller etwas aus seinem Sitz angehoben. Das Medium kann durch einen Ringspalt zwischen Ventilteller und Ventilsitz in die Leckagekammer eindringen. Dadurch erhöht sich der Druck auf den unteren Ventilteller, wodurch dieser fester in seinen Sitz gepreßt wird.

Zum Reinigen des oberen Ventilsitzes wird der vierte Kolben, der sich zwischen erstem und oberer Gehäusewand des Zylinders befindet, von unten mit Druckluft beaufschlagt. Der Kolben wird angehoben, bis er gegen die obere Zylinderwand anschlägt. Über einen Ventilschaft wird dadurch auch der untere Ventilteller etwas aus seinem Sitz angehoben. Durch das eindringende Medium wird der Anpreßdruck des oberen Ventiltellers auf seinen zugeordneten Ventilsitz verringert. Um zu verhindern, daß der obere Ventilteller durch das eindringende Medium angehoben wird, wird der erste Kolben über eine Verbindungsleitung auf seiner Oberseite ebenfalls mit Druckluft beaufschlagt. Über den zugeordneten Ventilschaft wird Druck auf den oberen Ventilteller ausgeübt, wodurch dieser fester in seinen Ventilsitz gepreßt wird.

Durch die Vielzahl der Schaltfunktionen gestaltet sich der Aufbau des Antriebs recht aufwendig.

Aufgabe der Erfindung ist es, ein Doppelsitz-Ventil der gattungsgemäßen Art mit seinem Antrieb so weiterzuentwickeln, daß es in seinem mechanischen Aufbau vereinfacht wird und eine geringere Bauhöhe aufweist.

Die Aufgabe wird dadurch gelöst, daß vom ersten sowie vom dritten Arbeitskolben ein zweiter Arbeitsraum gebildet wird, der über einen Kanal mit Druckluft beaufschlagbar ausgebildet ist, und der erste Arbeitskolben ein erstes und ein zweites Widerlager aufweist, das den Hub des dritten Arbeitskolbens begrenzt.

Auf diese Weise kann für die Reinigung des unteren Ventilsitzes auf einen speziellen Arbeitskolben zum Anheben des unteren Ventiltellers verzichtet werden. Die Anzahl der beweglichen Teile des Ventils verringert sich. Im Gegensatz zu den bisher verwendeten Antrieben für Doppelsitzventile benötigt das erfindungsgemäße Doppelsitzventil also nicht vier sondern lediglich drei Kolben, um alle gewünschten Funktionen, nämlich Öffnen, Schließen sowie Reinigen der Ventilsitze zuverlässig durchführen zu können. Gleichzeitig ergibt sich eine vorteilhaft geringere Bauhöhe für den Zylinder.

Dadurch, daß das zweite Widerlager des ersten Arbeitskolbens auf dessen Unterseite aufgesetzt ist, vorzugsweise mittels einer lösbaren Verbindung, wird die Montage bei der Herstellung erleichtert. Die Wartung des Ventils vereinfacht sich ebenfalls entsprechend. Zu Wartungszwecken können die beiden Arbeitskolben sehr leicht demontiert werden.

Der obere Ventilteller kann während der Reinigung des unteren Ventilsitzes mit erhöhtem Druck in seinen Ventilsitz gepreßt werden dadurch, daß der Kanal zur Beaufschlagung mit Druckluft vom zweiten Arbeitsraum durch den ersten Arbeitskolben geführt ist.

Durch die Beaufschlagung des zweiten Arbeitsraumes mit dem Druckmedium, üblicherweise Luft, wird der erste Arbeitskolben nach oben gehoben bis er mit seinem Widerlager am dritten Arbeitskolben zur Anlage kommt. Erster und dritter Arbeitskolben bilden nun quasi eine starre Einheit. Dadurch wird über den dem dritten Arbeitskolben zugeordneten rohrförmigen Ventilschaft der obere Ventilteller mit der Kraft der um den Hub des ersten Arbeitskolbens verkürzten Druckfeder in ihren Ventilsitz gepreßt.

Zur Versorgung des zweiten Arbeitsraumes mit Druckmedium ist vorgesehen, daß zwischen Umfangsfläche des ersten Arbeitskolbens und dem Zylinder ein Zuführkanal ausgebildet ist, in dem der Kanal mündet. Auf diese Weise wird ein fester Anschluß für das Druckmedium auch während der Hebebewegung des ersten Arbeitskolbens ermöglicht.

Die Herstellung des Antriebs wird weiter vereinfacht, wenn der Hub des zweiten Arbeitskolbens von einem Widerlager begrenzt ist, das vorzugsweise in der Wand des Zylinders vorgesehen ist.

Ein vom oberen Zylinderdeckel, Zylinder und erstem Arbeitskolben gebildeter erster Druckraum weist einen Druckluftanschluß auf, über dem der erste Druckraum mit einem Druckmedium, vorzugsweise Druckluft beaufschlagt werden kann. Auf diese Weise kann die Kraft, mit der der obere Ventilteller während der Reinigung des unteren Ventilsitzes in seinen Ventilsitz gepreßt wird weiter erhöht werden. Der Druck im ersten Arbeitsraum sollte dabei 50% des im zweiten Arbeitsraum herrschenden Druckes nicht übersteigen. Bei höherem Druck bewegt sich der erste Arbeitskolben nach unten und der untere Ventilteller fährt wieder in seinen Sitz ein.

Da mindestens einer der Ventilteller eine vorzugsweise in eine Durchtrittsöffnung des Ventilsitzes ragende Drosselkante aufweist, wird ein steiler Druckanstieg in der Leckagekammer während der Öffnungsbewegung der Ventilteller vermieden. Durch die geringere Einströmgeschwindigkeit des Mediums in die Leckagekammer werden auch die Dichtungen an den Ventiltellern geringer belastet.

Ein sicheres Einfahren der Ventilteller in die Ventilsitze wird erreicht, wenn die Ventilteller vorzugsweise konisch und die Drosselkante als Endkante einer angeformten zylindrischen Fläche ausgebildet ist, deren Höhe vorzugsweise den Betrag eines Reinigungshubes übersteigt. Durch die zylindrischen Drosselkanten erfährt der Ventilteller beim Einfahren in den Ventilsitz zunächst eine Führung, durch die konische Form der Ventilteller zentrieren sich diese beim Einfahren selbsttätig. Ein Verklemmen der Ventilteller und der Ventilsitze wird dadurch nahezu ausgeschlossen. Zum Reinigen der Dichtfläche kann der Ventilteller um einen kleinen Betrag angehoben werden. Über den Weg dieses Reinigungshubes bleibt der dabei sich bildende Drosselspalt konstant, da die Höhe der angeformten zylindrischen Fläche den Betrag des Reinigungshubes übersteigt.

Ein Druckanstieg im Leckageraum während der Reinigung der Ventilsitze wird vermieden dadurch, daß ein von Drosselkante und Durchtrittsöffnung gebildeter Drosselspalt eine geringere Durchtrittsfläche aufweist als die Gesamtfläche der Leitungen, die vom Leckagehohlraum gewöhnlich ins Freie münden.

Die Erfindung wird in einer bevorzugten Ausführungsform unter Bezugnahme auf eine Zeichnung beschrieben, wobei weitere vorteilhafte Einzelheiten der einzigen Figur der Zeichnung zu entnehmen sind.

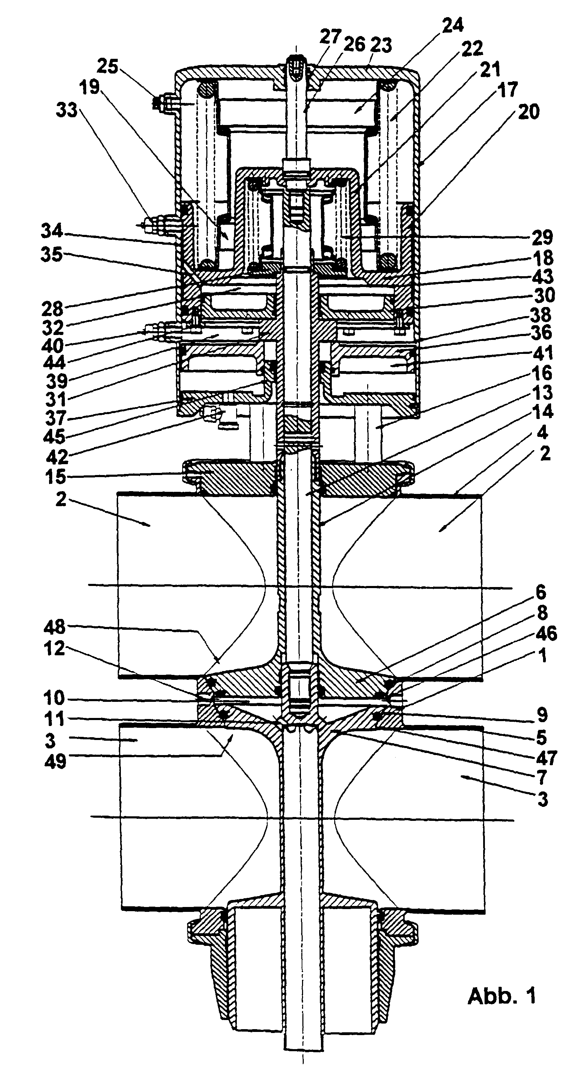

Diese zeigt schematisch einen Vertikalschnitt durch das erfindungsgemäße Doppelsitzventil in Ruhestellung. Gemäß Fig. 1 besteht das Doppelsitzventil aus einem ringförmigen leitungsverbindenden Gehäuseteil 1 mit Ventilsitzen 8 und 9. Der flüssigkeitsdichte Abschluß zwischen einem oberen Gehäuseteil 4 mit Leitungsanschlüssen 2 und dem unteren Gehäuseteil 5 mit Leitungsanschlüssen 3 erfolgt durch einen oberen Ventilteller 6 und einen unteren Ventilteller 7. In den Schließpositionen sitzen diese jeweils in dem oberen Ventilsitz 8 und dem unteren Ventilsitz 9. Zwischen den beiden Ventiltellern 6, 7 bildet sich in der dargestellten Schließposition ein Leckageraum 10. Im unteren Ventilteller 7 sind Bohrungen 11 vorgesehen, die zu einem Leckageausgang führen. Über einen im verbindenden Gehäuseteil 1 vorgesehenen Anschluß 12 kann zur Reinigung dem Leckageraum 10 Reinigungsmittel zugeführt werden, das dann über die Bohrungen 11 im unteren Ventilteller 7 zum Leckageausgang ins Freie abfließt. Bei anderen Einbaulagen kann der Anschluß 12 auch andere Funktionen übernehmen. Dringt ausnahmsweise über Ventilsitz 8 oder 9 Flüssigkeit in den Leckageraum 10, wird diese ebenfalls durch die Bohrungen 11 ins Freie abgeführt.

Eine Vermischung der Flüssigkeiten, die sich im oberen Ventilgehäuse 4 und im unteren Ventilgehäuse 5 befinden, wird somit mit Sicherheit verhindert.

Der untere Ventilteller 7 ist fest mit einem Ventilschaft 13 verbunden, während der obere Ventilteller 6 fest mit einem rohrförmigen Ventilschaft 14 verbunden ist, der seinerseits auf dem Ventilschaft 13 axial verschiebbar teleskopartig gelagert ist. An einem oberen Ventildeckel 15, der das obere Gehäuseteil 4 verschließt, ist über Abstandselemente 16 ein Zylinder 17 angeschlossen.

Am axial bewegbaren Ventilschaft 13 ist ein erster Arbeitskolben 18 fest angebracht. In seinem unteren Abschnitt ist der erste Arbeitskolben 18 topfförmig ausgebildet. Mit seiner äußeren Umfangsfläche schließt er dichtend mit der inneren Gehäusewandung des Zylinders 17 ab.

Ein oberer Abschnitt des Kolbens 18 weist eine ringförmig umlaufende Vertiefung 19 auf, die nach außen von einer Kolbenwand 20 begrenzt wird. In der Vertiefung 19 stützt sich eine Druckfeder 22 ab, die sich mit ihrem entgegengesetzten Ende an der oberen Gehäusewand 23 des Zylinders 17 abstützt. Auf diese Weise drückt die auf den ersten Arbeitskolben 18 wirkende vorgespannte Druckfeder 22 über den Ventilschaft 13 den unteren Ventilteller 7 fest auf den Ventilsitz 9. Durch die Kolbenwand 20 erhält der Kolben 18 eine längere Führung, ohne die Bauhöhe nachteilig zu beeinflussen.

Auf der gegenüberliegenden Seite der Vertiefung 19 weist der erste Arbeitskolben 18 einen topfförmigen Abschnitt 21 auf, in dem eine Feder 29 aufgenommen ist. Diese vorgespannte zweite Druckfeder 29 stützt sich mit dem oberen Ende im Bereich des Abschnitts 21 am ersten Arbeitskolben 18 und mit dem anderen Ende an einer Widerlagerscheibe 28 ab, die auf dem rohrförmigen Ventilschaft 14 befestigt ist. Die Kraft der Feder 29 drückt über die Widerlagerscheibe 28 und den rohrförmigen Ventilschaft 14 den oberen Ventilteller 6 auf seinen Ventilsitz 8.

Das Ventil ist auf diese Weise drucklos geschlossen.

Der von Zylinder 17, einem oberen Zylinderdeckel 23 und dem ersten Arbeitskolben 18 gebildete Druckraum 24 kann über Anschluß 25 mit Druckluft beaufschlagt werden. Auf diese Weise kann der erste Arbeitskolben 18 zusätzlich zur Federkraft der Druckfeder 22 nach unten gepreßt werden.

Oberhalb des ersten Arbeitskolben 18 ist der Ventilschaft 13 in einer Verlängerung 26 fortgeführt. Diese ist durch eine Öffnung 27 gedichtet durch die obere Gehäusewand 23 des Zylinders geführt und nimmt so eine zusätzliche Führungsfunktion für die Ventilschäfte und die Arbeitskolben vor. Außerdem kann dadurch von außen sofort visuell der augenblickliche Schaltzustand des Ventils erkannt werden.

In seinem unteren Abschnitt nimmt der erste Arbeitskolben 18 einen dritten Arbeitskolben 30 auf. Der dritte Arbeitskolben 30 ist beweglich auf dem rohrförmigen Schaft 14 gelagert. In der in der Figur gezeigten Ruhestellung liegt er auf einem als ringförmige Schulter des rohrförmigen Ventilschaftes 14 ausgebildeten Widerlager 31 auf. Erster und dritter Arbeitskolben 18, 30 bilden einen zweiten Arbeitsraum 32, der über Anschluß 33, Kanal 34 und Bohrung 35 mit Druckluft beaufschlagt werden kann.

Unterhalb des ersten Arbeitskolbens 18 befindet sich in Zylinder 17 der zweite Arbeitskolben 36, der auf einer rohrförmigen Einstülpung 45 des unteren Ventildeckels 37 gelagert ist. Sein Hub wird von dem unteren Zylinderdeckel 37 und einem in den Zylinder Gehäusewand eingeformten Anschlag 38 begrenzt.

Zwischen dem zweiten Arbeitskolben 36 sowie dem ersten und dritten Arbeitskolben 18, 30 ist ein dritter Druckraum 39 ausgebildet, der über Anschluß 40 mit Druckluft beaufschlagt werden kann.

Zwischen unterem Zylinderdeckel 37 und zweitem Arbeitskolben 36 befindet sich ein vierter Druckraum 41, der über Anschluß 42 mit Druckluft beaufschlagt werden kann.

Geöffnet wird das Ventil, indem Druckluft auf Anschluß 40 geschaltet wird. Durch die Druckerhöhung im dritten Druckraum 39 wird zunächst der dritte Arbeitskolben 30 auf dem rohrförmigen Schaft 14 nach oben bewegt, bis er an einer Widerlagerfläche 43 des ersten Arbeitskolbens anschlägt. Darauf heben sich erster und dritter Arbeitskolben gemeinsam weiter an, wodurch über Ventilschaft 13 der untere Ventilteller 7 angehoben wird, bis dieser sich am oberen Ventilteller 6 anlegt. Leckageraum 10 ist dann geschlossen. Die anliegenden Flächen der Ventilteller werden durch die Feder 29 aneinandergepreßt. Im weiteren bewegen sich erster und dritter Arbeitskolben 18, 30 gemeinsam weiter nach oben unter Mitnahme des oberen und des unteren Ventiltellers 6, 7, bis das Ventil vollständig geöffnet ist. Während des Hubes wird die Feder 22 zusammengedrückt.

Der Schließvorgang läuft in umgekehrter Reihenfolge ab. Über Anschluß 40 wird der dritte Arbeitsraum 39 entlüftet. Darauf senkt sich der erste und dritte Arbeitskolben 18, 30 ab, bis der obere Ventilteller 6 über den rohrförmigen Ventilschaft 14 von der Feder 22 in den oberen Ventilsitz 8 gedrückt wird. Der untere Ventilteller 7 bewegt sich unter dem Druck der Federn weiter nach unten, bis er seinen unteren Ventilsitz 9 erreicht und dort über Schaft 13 von der Feder 29 hineingedrückt wird. Beim Schließen bildet sich somit wieder der Abstand zwischen dem oberen Ventilteller 6 und dem unteren Ventilteller 7, so daß der Leckageraum 10 wieder zwischen den beiden Ventiltellern 6, 7 entsteht. Der dritte Arbeitskolben 30 löst sich dabei vom ersten Arbeitskolben 18, und liegt im drucklosen Zustand wieder auf der Schulter 31 auf.

Oberer und unterer Ventilteller weisen jeweils Drosselkanten 46, 47 auf, der Durchmesser der von den Drosselkanten 46, 47 gebildeten Fläche ist dabei geringer als der Durchmesser der Durchtrittsöffnungen 48, 49. Die Durchmesser sind dabei so gewählt, daß die Fläche des von Drosselkanten 46, 47 und Durchtrittsöffnungen 48, 49 gebildeten ringförmigen Drosselspalts geringer ist als die Fläche der Bohrungen 11.

Zur Reinigung des unteren Ventilsitzes 9 kann der untere Ventilteller einzeln angehoben werden. Dabei wird an Anschluß 33 Druckluft angelegt. Über Kanal 34 und Bohrung 35 erhöht sich der Druck im zweiten Druckraum 32. Da der dritte Arbeitskolben 30 auf der Schulter 31 aufliegt, wird durch den Druck der erste Arbeitskolben 18 nach oben getrieben, bis seine Widerlager 44 an der Unterseite des dritten Arbeitskolben 30 anliegen. Erster und dritter Arbeitskolben 18, 30 bilden nun eine Einheit. Über den Schaft 13 ist der untere Ventilteller 7 leicht angehoben worden.

Durch den ringförmigen Drosselspalt zwischen Ventilteller 7 und Ventilsitz 9 kann Medium aus dem unteren Gehäuseteil 5 in den Leckageraum 10 eindringen, wodurch eine Reinigung des Ventilsitzes und des Leckageraumes erfolgt. Über die Bohrungen 11 wird das Medium dann nach Außen abgeführt. Da die Fläche des ringförmigen Drosselspalts geringer ist als die Fläche der Bohrungen 11, erfolgt während der Reinigung nahezu kein Druckanstieg im Leckageraum 10 durch Eindringen des Mediums. Diese Anordnung von Drosselkanten und Durchtrittsöffnung kann unabhängig vom erfindungsgemäßen Ventilantrieb auch mit anderen Ventilantrieben verwirklicht werden.

Bei Blockierung der Bohrungen 11, beispielsweise durch Fremdkörper, erfolgt ein Druckanstieg im Leckageraum 10 durch das eindringende Medium. Auf den oberen Ventilteller wirkt dann eine erhöhte Kraft in Öffnungsrichtung des Ventils. Da erster 18 und dritter Arbeitskolben 30 bei Druckbeaufschlagung des zweiten Arbeitsraumes 32 quasi eine starre Einheit bilden, wird der obere Ventilteller mit der Kraft der um den Hub des ersten Arbeitskolbens 18 verkürzten Druckfeder 22 in seinen Ventilsitz 8 gepreßt. Der Anpreßdruck des oberen Ventiltellers 6 kann noch erhöht werden, indem zusätzlich über Anschluß 25 der erste Druckraum 24 mit Druck beaufschlagt wird. Der Druck im ersten Druckraum 24 sollte 50% des im zweiten Arbeitsraum herrschenden Drucks nicht übersteigen, da sonst der erste Arbeitskolben 18 gegen den im zweiten Arbeitsraum 32 herrschenden Druck nach unten bewegt wird und das Ventil wieder geschlossen wird.

Der Hub zur Reinigung des oberen Ventiltellers 6 wird durch Anlegen von Druckluft an Anschluß 42 eingeleitet. Durch den erhöhten Druck im vierten Druckraum 41 wird der zweite Arbeitskolben 36 nach oben getrieben, bis er am Widerlager 31 anliegt. Daraufhin wird mit dem Widerlager 31 der rohrförmige Schaft 14 angehoben, bis der zweite Arbeitskolben 36 gegen Widerlager 38 stößt. Dadurch wird der obere Ventilteller 6 geringfügig aus seinem Ventilsitz 8 angehoben. Durch den Drosselspalt zwischen dem Ventilsitz 8 und Ventilteller 6 kann nun Medium aus dem oberen Gehäuseteil 4 in den Leckageraum 10 eindringen, wodurch eine Reinigung des Ventilsitzes erfolgt. Zum Absenken wird der vierte Druckraum 41 entlastet, wodurch der zweite Arbeitskolben 36 abgesenkt wird und der Ventilteller 6 durch die Feder 29 über den rohrförmigen Schaft 14 wieder in seinen Ventilsitz 8 gedrückt wird.

Die Funktionsweise ist in der folgenden Tabelle zusammengefaßt:

| Anschluß Funktion: | 42 | 40 | 33 | 25 |
|---|---|---|---|---|
| Öffnen | 0 | L | 0 | 0 |
| Schließen | 0 | 0 | 0 (L) | 0 (L) |
| Sitzreinigung oben | L | 0 | 0 | 0 |
| Sitzreinigung unten | 0 | 0 | L | 0 (L) |
| Bedeutung: L: mit Druck beaufschlagt 0: drucklos | | | | |

Auf diese Weise ist ein Ventil verwirklicht, das ohne zusätzlichen Schaltungsaufwand bei vorteilhaft verringerter Zahl an mechanischen Komponenten auch im Reinigungsbetrieb sicher das Mischen von Medien vermeidet.

### Bezugszeichenliste

- 1: Gehäuseteil
- 2: Leitungsanschluß
- 3: Leitungsanschluß
- 4: oberes Gehäuseteil
- 5: unteres Gehäuseteil
- 6: oberer Ventilteller
- 7: unterer Ventilteller
- 8: oberer Ventilsitz
- 9: unterer Ventilsitz
- 10: Leckageraum
- 11: Bohrung
- 12: Anschluß
- 13: Ventilschaft
- 14: rohrförmiger Ventilschaft
- 15: oberer Ventildeckel
- 16: Abstandselemente
- 17: Zylinder
- 18: erster Arbeitskolben
- 19: Vertiefung
- 20: Kolbenwand
- 21: topfförmiger Abschnitt
- 22: Druckfeder
- 23: oberer Zylinderdeckel
- 24: erster Druckraum
- 25: Druckluftanschluß
- 26: Verlängerung
- 27: Öffnung
- 28: Widerlagerscheibe
- 29: Druckfeder
- 30: dritter Arbeitskolben
- 31: Widerlager
- 32: zweiter Arbeitsraum
- 33: Anschluß
- 34: Kanal
- 35: Bohrung
- 36: zweiter Arbeitskolben
- 37: unterer Zylinderdeckel
- 38: Anschlag
- 39: dritter Druckraum
- 40: Anschluß
- 41: vierter Druckraum
- 42: Anschluß
- 43: Widerlagerfläche
- 44: Widerlager
- 45: Einstülpung
- 46: Drosselkante
- 47: Drosselkante
- 48: Durchtrittsöffnung
- 49: Durchtrittsöffnung

## Patentansprüche

1. Doppelsitzventil mit Leckagesicherung, insbesondere für die Lebensmittel- und Getränkeindustrie, das in seinem Gehäuse (1) zwei zusammenwirkende Ventilteller (6,7) aufweist, die einen Leckagehohlraum (10) begrenzen, der über Leitungen (11) ins Freie mündet, wobei für das Betätigen beider Ventilteller (6,7) ein gemeinsamer Antrieb vorgesehen ist, der einen Zylinder (17) mit einem beidseitig von Druckfedern (29,22) belasteten ersten Arbeitskolben (18) enthält, welcher fest mit dem Ventilschaft (13) des unteren Ventiltellers (7) verbunden ist, wobei dieser Ventilschaft (13) teleskopartig den oberen Ventilteller (6) und dessen rohrförmigen Schaft (14) durchsetzt, der seinerseits mit seinem oberen Ende in den Zylinder (17) ragt und dort ein Widerlager (28) trägt für die den oberen Ventilteller (6) in seinen Sitz (8) drückende, untere Druckfeder (29), während die obere, sich mit ihrem oberen Ende am oberen Zylinderdeckel (23) abstützende Druckfeder (22) den unteren Ventilteller (7) gegen seinen Ventilsitz (9) drückt, sowie im Zylinder (17) unter dem ersten Arbeitskolben (18) ein zweiter, auf den rohrförmigen Schaft wirkender, Arbeitskolben (36) angeordnet ist, und zwischen erstem und zweitem Arbeitskolben ein auf dem rohrförmigen Schaft beweglicher dritter Arbeitskolben (30) angeordnet ist, wobei der dritte Arbeitskolben (30) in seiner Umfangsfläche dichtend vom ersten Arbeitskolben (18) umfaßt ist, und erster und dritter Arbeitskolben gegeneinander verschiebbar ausgebildet sind, **dadurch gekennzeichnet,** daß vom ersten (18) sowie vom dritten (30) Arbeitskolben ein zweiter Arbeitsraum (32) gebildet wird, der über einen Kanal (35) mit Druckluft beaufschlagbar ausgebildet ist, und der erste Arbeitskolben (18) ein erstes (43) und ein zweites Widerlager (44) aufweist, das den Hub des dritten Arbeitskolbens (30) begrenzt.

2. Doppelsitzventil nach Anspruch 1, **dadurch gekennzeichnet,** daß das zweite Widerlager (44) des ersten Arbeitskolbens (18) auf dessen Unterseite aufgesetzt ist, vorzugsweise mittels einer lösbaren Verbindung.

3. Doppelsitzventil nach Anspruch 1 oder 2 **dadurch gekennzeichnet,** daß der Kanal (35) zur Beaufschlagung mit Druckluft vom zweiten Arbeitsraum (32) durch den ersten Arbeitskolben (18) geführt ist.

4. Doppelsitzventil nach Anspruch 1, 2 oder 3, **dadurch gekennzeichnet,** daß zwischen Umfangsfläche des ersten Arbeitskolbens (18) und dem Zylinder (17) ein Zuführkanal (34) ausgebildet ist, in dem der Kanal (35) mündet.

5. Doppelsitzventil nach Anspruch 1, 2, 3 oder 4, **dadurch gekennzeichnet,** daß der Hub des zweiten Arbeitskolbens (36) von einem Widerlager (38) begrenzt ist, das vorzugsweise in der Wand des Zylinders (17) vorgesehen ist.

6. Doppelsitzventil nach Anspruch 1, 2, 3, 4 oder 5, **dadurch gekennzeichnet,** daß ein vom oberen Zylinderdeckel (23), Zylinder (17) und erstem Arbeitskolben (18) gebildeter erster Druckraum (24) einen Druckluftanschluß (25) aufweist.

7. Doppelsitzventil nach Anspruch 1, 2, 3, 4, 5 oder 6, **dadurch gekennzeichnet,** daß mindestens einer der Ventilteller (8, 9) eine vorzugsweise in eine Durchtrittsöffnung (48, 49) des Ventilsitzes ragende Drosselkante (46, 47) aufweist.

8. Doppelsitzventil nach Anspruch 7, **dadurch gekennzeichnet,** daß die Ventilteller (6, 7) vorzugsweise konisch und die Drosselkante (46, 47) als Endkante einer angeformten zylindrischen Fläche ausgebildet ist, deren Höhe vorzugsweise den Betrag eines Reinigungshubes übersteigt.

9. Doppelsitzventil nach Anspruch 7 oder 8, **dadurch gekennzeichnet,** daß ein von der Drosselkante (46, 47) und der Durchtrittsöffnung (48, 49) gebildeter Drosselspalt eine geringere Durchtrittsfläche aufweist als die Gesamtfläche der Leitungen (11), die vom Leckagehohlraum ins Freie münden.

## Claims

1. Double-seated valve with leakage protection, in particular for the food and drink industry, which in its housing (1) has two cooperating valve discs (6, 7) delimiting a leakage cavity (10), which opens via lines (11) into the open air, wherein for operating both valve discs (6, 7) a common drive is provided, which comprises a cylinder (17) with a first working piston (18) loaded on both sides by compression springs (29, 22), which is firmly connected to the valve stem (13) of the lower valve disc (7), wherein said valve stem (13) in a telescopic manner penetrates the upper valve disc (6) and the latter's tubular stem (14), which in turn projects with its top end into the cylinder (17) and there carries an abutment (28) for the lower compression spring (29) which presses the upper valve disc (6) into its seat (8), while the upper compression spring (22) supported by its top end against the top cylinder cover (23) presses the lower valve disc (7) against its valve seat (9), and wherein a second working piston (36) is disposed in the cylinder (17) below the first working piston (18) and acts upon the tubular stem, and a third working piston (30) is disposed between first and second working piston and is movable on the tubular stem, wherein the third working piston (30) at its peripheral surface is sealingly embraced by the first working piston (18), and first and third working piston are designed so as to be mutually displaceable, characterized in that the first (18) and the third (30) working piston form a second working chamber (32), into which compressed air may be admitted via a channel (35), and the first working piston (18) comprises a first (43) and a second abutment (44), which delimits the stroke of the third working piston (30).

2. Double-seated valve according to claim 1, characterized in that the second abutment (44) of the first working piston (18) is placed onto the underside of the latter, preferably by means of a detachable connection.

3. Double-seated valve according to claim 1 or 2, characterized in that the channel (35) for admitting compressed air into the second working chamber (32) passes through the first working piston (18).

4. Double-seated valve according to claim 1, 2 or 3, characterized in that formed between the peripheral surface of the first working piston (18) and the cylinder (17) is a supply channel (34), into which the channel (35) opens.

5. Double-seated valve according to claim 1, 2, 3 or 4, characterized in that the stroke of the second working piston (36) is delimited by an abutment (38), which is preferably provided in the wall of the cylinder (17).

6. Double-seated valve according to claim 1, 2, 3, 4 or 5, characterized in that a first pressure chamber (24) formed by the top cylinder cover (23), cylinder (17) and first working piston (18) has a compressed-air connection (25).

7. Double-seated valve according to claim 1, 2, 3, 4, 5 or 6, characterized in that at least one of the valve discs (8, 9) has a throttling edge (46, 47), which preferably projects into a through-opening (48, 49) of the valve seat.

8. Double-seated valve according to claim 7, characterized in that the valve discs (6, 7) are preferably conical and the throttling edge (46, 47) takes the form of an end edge of a cylindrical surface formed thereon, the height of which preferably exceeds the dimension of a cleaning stroke.

9. Double-seated valve according to claim 7 or 8, characterized in that a throttling gap formed by the throttling edge (46, 47) and the through-opening (48, 49) has a smaller area of passage than the total area of the lines (11) which lead from the leakage cavity into the open air.

## Revendications

1. Soupape à deux sièges avec une sécurité contre les fuites, en particulier pour l'industrie alimentaire et l'industrie des boissons, la soupape présentant dans son boîtier (1) deux têtes de soupape (6, 7) qui coopèrent l'une avec l'autre qui délimitent une cavité de fuite (10) débouchant à l'air libre par des conduites (11), un mécanisme d'entraînement commun étant prévu pour actionner les deux têtes de soupape (6, 7), mécanisme d'entraînement qui comprend un cylindre (17) avec un premier piston de travail (18) comprimé des deux côtés par des ressorts de compression (29, 22) qui est relié de façon solidaire à la tige (13) de la tête inférieure (7) de la soupape, cette tige de soupape (13) traversant de manière télescopique la tête supérieure (6) de la soupape et sa tige de forme tubulaire (14) qui de son côté pénètre par son extrémité supérieure dans le cylindre (17) et porte à cet endroit une butée (28) pour le ressort de compression inférieur (29) qui presse la tête supérieure de soupape (6) sur son siège (8), tandis que le ressort de compression supérieur (22) qui prend appui par son extrémité supérieure sur le couvercle supérieur (23) du cylindre, presse la tête inférieure (7) de la soupape contre son siège (9), et que dans le cylindre (17), sous le premier piston de travail (18), est disposé un deuxième piston de travail (36) qui agit sur la tige de forme tubulaire, et qu'entre le premier et le deuxième piston de travail est disposé un troisième piston de travail (30) mobile sur la tige de forme tubulaire, le troisième piston de travail (30) étant entouré par le premier piston de travail (18) de façon étanche sur sa surface périphérique, tandis que les premier et troisième pistons de travail sont constitués de façon à pouvoir coulisser l'un contre l'autre,
caractérisée en ce que
• le premier piston de travail (18) et le troisième piston de travail (30) constitue une deuxième chambre de travail (32) qui est formée de façon à pouvoir recevoir de l'air comprimé par un canal (35), et
• le premier piston de travail (18) présente une première butée (43) et une deuxième butée (44) qui limitent la course du troisième piston de travail (30).

2. Soupape à deux sièges selon la revendication 1,
caractérisée en ce que
la deuxième butée (44) du premier piston de travail (18) est mise sur sa face inférieure, de préférence au moyen d'une liaison amovible.

3. Soupape à deux sièges selon la revendication 1 ou 2,
caractérisée en ce qu'
on fait passer le canal (35) à travers le premier piston de travail (18) pour l'alimentation en air comprimé de la deuxième chambre de travail (32).

4. Soupape à deux sièges selon la revendication 1 ou 2,
caractérisée en ce que
entre la surface périphérique du premier piston de travail (18) et le cylindre (17) est constitué un canal d'amenée (34) dans lequel débouche le canal (35).

5. Soupape à deux sièges selon la revendication 1, 2, 3 ou 4,
caractérisée en ce que
la course du deuxième piston de travail (36) est limitée par une butée (38) qui est prévue de préférence dans la paroi du cylindre (17).

6. Soupape à deux sièges selon la revendication 1, 2, 3, 4 ou 5,
caractérisée en ce qu'
une première chambre de pression (24) formée par le couvercle supérieur de cylindre (23), le cylindre (17) et le premier piston de travail (18), présente un raccord (25) pour de l'air comprimé.

7. Soupape à deux sièges selon la revendication 1, 2, 3, 4, 5 ou 6,
caractérisée en ce que
au moins l'une des tètes de soupape (8, 9) présente une arête d'étranglement (46, 47) qui pénètre dans un orifice de passage (48, 49) du siège de soupape.

8. Soupape à deux sièges selon la revendication 7,
caractérisée en ce que
• la tête de soupape (6, 7) est constituée de préférence de façon conique, et
• l'arête d'étranglement (46, 47) est constituée sous la forme de l'arête terminale d'une surface cylindrique dont la hauteur dépasse de préférence l'amplitude d'une course de nettoyage.

9. Soupape à deux sièges selon la revendication 7 ou 8,
caractérisée en ce qu'
une fente d'étranglement formée par l'arête d'étranglement (46, 47) et par l'orifice de passage (48, 49), présente une surface de passage plus faible que la surface totale des conduites (11) qui débouchent à l'air libre à partir de la cavité de fuite.
